# EUROPEAN PATENT APPLICATION

(11) **EP 4 807 347 A1**
(43) Date of publication of application: **16.09.2026**
(21) Application number: 25382242.3
(22) Date of filing: 14.03.2025
(51) Int. Cl.: G01N 21/65, G01N 21/35

(54) **A METHOD FOR THE MEASUREMENT OF THE RATES OF ION EXCHANGE AND DIFFUSION OF AN IONIC CONDUCTING MATERIAL OR MIXED IONIC-ELECTRONIC CONDUCTING MATERIAL**

(71) Applicant: Fundació Institut de Recerca en Energia de Catalunya, 08930 Sant Adrià del Besòs (ES); Institució Catalana de Recerca I Estudis Avançats, 08010 Barcelona (ES); Institut Polytechnique de Grenoble (Grenoble INP), 38000 Grenoble (FR); UNIVERSITE GRENOBLE ALPES (UGA), 38400 Saint Martin D'Heres (FR); CENTRE NATIONAL DE LA RECHERCHE SCIENTIFIQUE (CNRS), 75016 Paris (FR)
(72) Inventor: BURRIEL LÓPEZ, Mónica, 38120 SAINT-EGRÈVE (FR); CHIABRERA, Francesco, 08012 BARCELONA (ES); STANGL, Alexander, 38000 GRENOBLE (FR); TARANCÓN RUBIO, Albert, 08031 BARCELONA (ES); BAIUTTI, Federico, 08026 BARCELONA (ES); MUÑOZ ROJAS, David, 38120 SAINT-EGRÈVE (FR); SHEN, Zonghao, 38360 SASSENAGE (FR)
(74) Representative: Ponti & Partners, S.L.P

(57) **Abstract**

The present invention relates to a method for the measurement of the rates of ion exchange and diffusion of an ionic conducting material or mixed ionic-electronic conducting material. The present invention shows that it is possible to apply isotopic exchange Raman spectroscopy (IERS) to study the ionic motion of an ion conductor or mixed ionic electronic conductor regardless of the presence of a Raman active mode related with the ion of interest.

## Description

### Field of the invention

The present invention relates to conducting materials, in particular, to an ionic conducting material or a mixed ionic-electronic conducting material. In particular, the present invention relates to a method for the measurement of the rates of ion exchange and diffusion of an ionic conducting material or mixed ionic-electronic conducting material.

### Background

Ionic conductive solid-state compounds play a pivotal role in various modern energy-and electronics-related electrochemical devices such as ion batteries[1-3], solid oxide cells (SOCs)[4,5], protonic ceramic fuel cells (PCFCs)[6], oxygen transport membranes[7-9], memristive/resistive switching devices[10] etc. For all these devices, ionic motion (i.e. diffusion and surface exchange) directly impacts the overall electrochemical performance. Taking SOC as an example, the sluggish kinetics of oxide ion motion in the electrolyte and oxygen mass transport at the oxygen electrode have historically limited their operation of in the high temperature range (above 700°C). To achieve high device performance with increased durability and decreased capital cost, materials with high oxygen surface exchange kinetics and fast oxide-ion diffusivity need to be developed and scrutinized. Therefore, the development of techniques capable of measuring ion transport properties of ionic conductors and mixed-ionic and electronic conductors (MIEC) is highly required.

The most well-established approach to measure ionic motion in solid-state inorganic compounds is the oxygen isotopic exchange depth profiling with secondary ion mass spectroscopy (IEDP-SIMS) method.[11-13] The technique consists in performing an exchange with an isotope (i.e. the tracer) of the ion of interest under controlled conditions (atmosphere, temperature, electrochemical bias, ...), allowing the isotope to incorporate and diffuse into the material, substituting the original ion. The isotope can be introduced in the system in liquid, solid or gaseous form. The concentration of isotope exchange and its depth profile are then frozen through a quenching and measured ex-situ by IEDP-SIMS. With this technique, the main ion transport properties can be obtained unambiguously, namely the surface exchange (k) and oxygen diffusion (D) coefficients of the tracer exchange. These parameters describe how fast the ion is exchanged and moves inside the compound under study, respectively. Nevertheless, the necessity of SIMS instrument for this technique has hindered its accessibility due to its high cost. Moreover, the analysis process is destructive and in-situ measurement is not possible. Pulsed isotope exchange (PIE)[14] is a modification of this method that consists in analyzing the gaseous products during the exchange experiments, thus allowing in-situ measurements. However, this technique only provides the surface exchange coefficient and requires the sample in powder form.

Other techniques have been proposed in literature to study ionic motion. For pure ionic conductors, ionic diffusion can be measured electrically, for example using electrochemical impedance spectroscopy.[15] However, in the case of mixed-ionic and electronic conductors this approach cannot be used, since the electronic contribution usually dominates the electrical response. For these materials, a well-known approach is to modify their internal equilibrium (for example by the variation of the atmosphere or by the application of an electrochemical potential) and to measure the evolution of a specific property dependent on the concentration of ion under study. This can be for instance the conductivity (electrical conductivity relaxation, ECR)[16] or the lattice parameter (time-resolved X-ray diffraction, TR-XRD)[17]. If an electrochemical potential is used to modify the equilibrium concentration of ions of a MIEC, the electrochemical current can also provide information on the ion kinetics (Galvanostatic Intermittent Titration Technique, GITT)[18,19]. These methods offer important insights into the kinetics of ion motion and exchange, but their response can be difficult to deconvolute and interpret.

Recently, isotopic exchange Raman spectroscopy (IERS) was proposed as a novel method to investigate the oxygen surface exchange and diffusion dynamics of the oxygen ion conductor Gd-doped ceria (CGO).[20,21] This technique is based on the sensitivity of Raman to isotope concentration and allows a facile measurement of oxygen surface exchange and diffusion in-situ, presenting an unprecedent time resolution. Nevertheless, this promising technique has an important constrain: the necessity of an active Raman mode related with the vibration of the ion of interest. Indeed, to the best of our knowledge, among all the reported ion conducting oxide materials, until now the oxygen isotopic exchange Raman spectroscopy (IERS) has only been performed on pure oxygen ionic conducting yttria-stabilised zirconia (YSZ)[22-24] and CGO materials[20,21] thanks to their active vibrational modes of oxygen motions. This makes IERS a material property limited method.

To overcome the previous drawbacks, the present invention shows that it is possible to apply this IERS to study the ionic motion of an ion conductor or mixed ionic electronic conductor regardless of the presence of a Raman active mode related with the ion of interest. This methodology can be readily expanded to various functional material in thin film or nano-particle form without the intrinsic limitations of materials and meanwhile can be applied as a standard approach to study ion exchange and diffusion with unprecedent time-resolution under in situ conditions.

### Summary of the invention

Accordingly, in a first aspect, the present invention relates to a method for the measurement of the rates of ion exchange and diffusion of an ionic conducting material or mixed ionic-electronic conducting material as defined in the claims.

### Brief description of the drawings

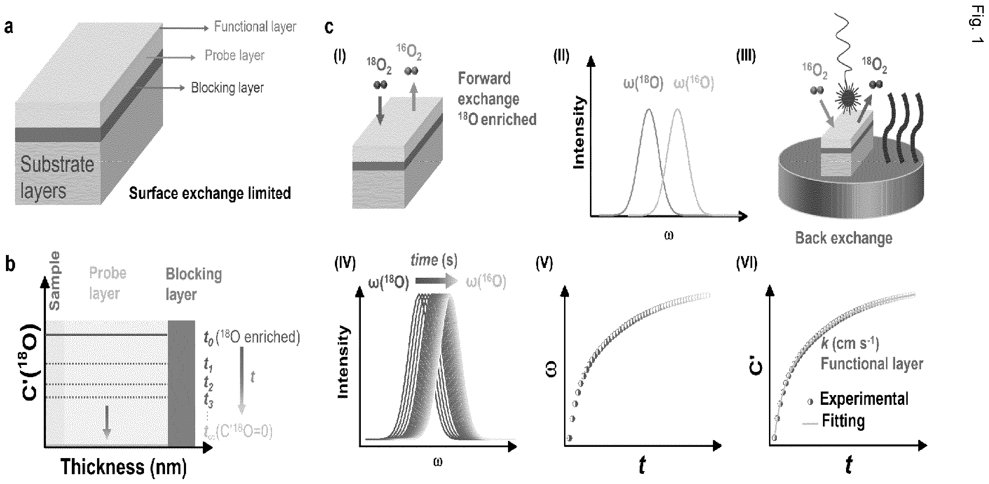

**Figure** 1. Schematic of the universal IERS methodology to study oxygen surface exchange dynamics with a probe layer for oxygen surface exchange limited process. (a) Configuration of the multilayer thin film samples and (b) Normalised oxygen isotopic concentration over the multilayers at different exchange durations in the case of surface exchange limited process. (c) IERS methodology of sample treatment, data collection and analysis: (I) the as-deposited multilayer thin film is enriched with ¹⁸O via 'forward' oxygen isotopic exchange; (II) the Raman spectra of the ¹⁸O enriched case show a shift of the active Raman mode of the probe layer; (III) in the IERS measurements, the sample is heated under air flow ('back' exchange) and continuously studied by Raman analysis of the probe layer; (IV) Raman spectra are collected during back exchange presenting the continuous mode shifts of the probe layer; (V) Raman shifts are presented as a function of exchange duration after peak deconvolution and converted in ¹⁸O concentration (C'¹⁸O) (VI), allowing to extract the kinetic of oxygen surface exchange in the functional layer.

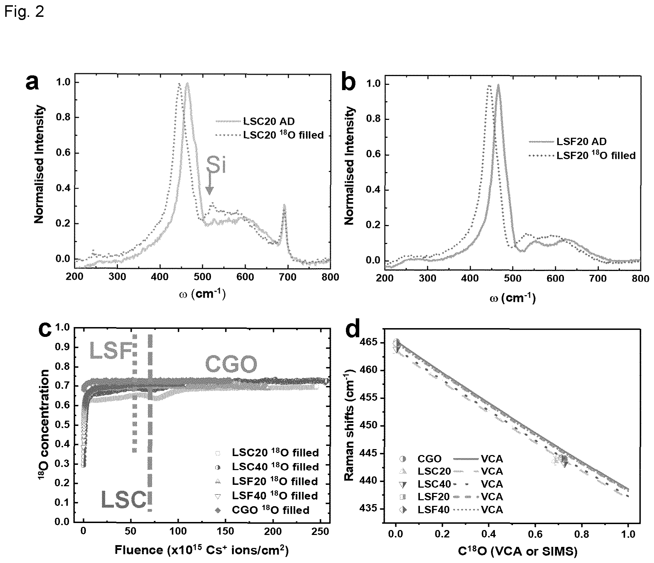

**Figure** 2 ¹⁸O isotope induced Raman wavenumber shifts after ¹⁸O forward exchange compared with the ¹⁸O reference samples of (a) LSC20 and (b) LSF20 measured at room temperature. (c) ToF-SIMS depth profiles on the ¹⁸O filled multilayer thin films to investigate the ¹⁸O concentration and distribution in each layer. The LSC layers are on the left of the blue dash line, the LSF layers are on the left of the yellow dash line while CGO layers are on the right side of both dash lines. The SIMS depth profile of CGO reference sample is also presented in red dots. (d) Comparison of the correlated Raman shifts and the measured isotopic fraction by SIMS (points) with the estimation based upon the virtual crystal approximation model (dash lines).

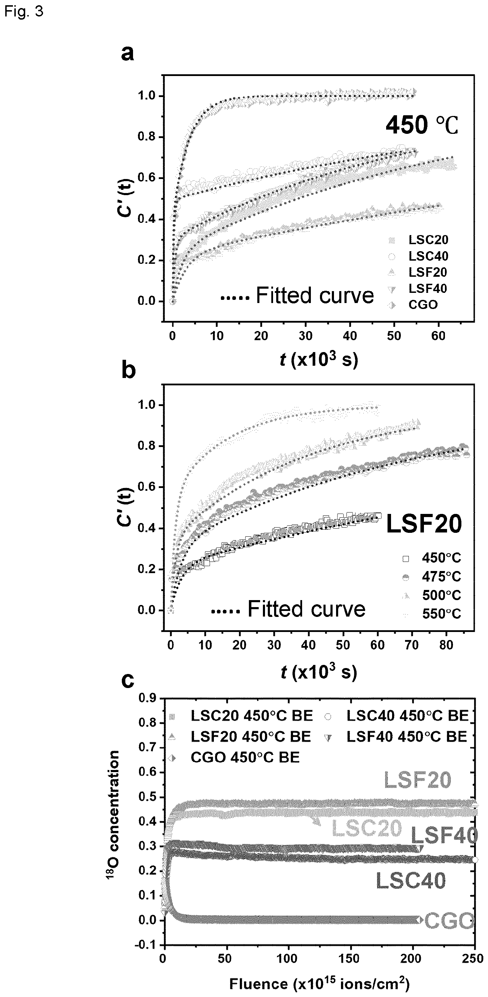

**Figure** 3 Normalised ¹⁸O concentration as a function of annealing duration under an air flow (*p*O₂ = 200 mbar) (a) at 450 °C for different materials and (b) for LSF20 samples at varied temperatures. (c) ToF-SIMS depth profiles on the multilayer thin films after back exchange at 450 °C under the flow of compressed air to investigate the ¹⁸O concentration and distribution in each layer.

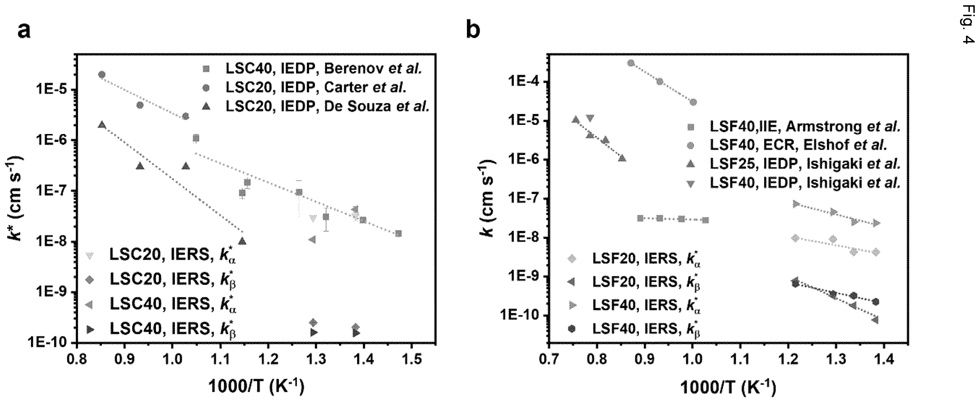

**Figure** 4 Comparison of the obtained surface exchange coefficients of (a) LSC and (b)LSF via different in situ and ex situ techniques in Arrhenius plots. The suffix number presents the percentage of Sr substitution. For the LSC samples, the surface exchange coefficients via IERS are compared with the conventional ex-situ IEDP-SIMS method: LSC40, *p*O₂=0.23 bar, Berenov *et* al.,[25] LSC20, *p*O₂=0.75 bar, Carter *et al.,* [26] LSC40, *p*¹⁸O₂=1 bar, De Souza *et* al.[27,28] For the LSF samples, the surface exchange coefficients via IERS (k*) are compared with the *k (k** and *k*_{chem}) obtained via in situ and ex situ methods: LSF40, isothermal isotope exchange (IIE), Armstrong et al.,[29] LSF40, electrical conductivity relaxation (ECR), *k*_{chem}, Elshof *et al.,[16]* and LSF25, LSF40, IEDP, *p*O₂= 0.065 bar, Ishigaki *et* al.[30]

### Detailed description

The present invention relates to a method for the measurement of the rates of ion exchange and diffusion of an ionic conducting material or mixed ionic-electronic conducting material, comprising the steps of:
a) depositing a probe layer over a substrate, wherein said probe layer is made of an ionic conductor that has at least one Raman or IR-active mode which involves the vibration of the ion or ions of interest, and wherein said probe layer is continuous and dense, and has a thickness from 1 nm to 1 µm, and wherein said substrate is selected from a metal, a ceramic, a glass or a semiconductor inert to the ion of interest and does not have any interferential Raman mode, wherein by "interferential Raman mode" is meant that the Raman mode from the substrate is with indistinguishable wavenumber as the vibration of the ion or ions of interest from the probe layer;
b) depositing a functional layer in the form of a film over the probe layer, wherein said functional layer is an ionic conducting material or mixed ionic-electronic conducting material with a thickness from 1 nm to 1 µm;
c) exposing the material constituted by functional layer-probe layer-substrate obtained after step b) to a medium containing a different concentration of a labelled isotope of the ion of interest for exchanging the preexisting ion of interest in the probe layer and in the functional layer;
d) performing a Raman or IR spectroscopy and measuring the width/intensity and/or frequency of the Raman or IR modes of interest in the probe layer at the same time of step c) or after step c);
e) quantifying the total or labelled isotope concentration of the ion of interest in the probe layer by using the relationship between the frequency and/or the width/intensity of the Raman or IR-active mode of the ion of interest and its total or labelled isotope concentration;
f) quantifying the rate of ion exchange or diffusion of the ion of interest of the functional layer based on the evolution of the labelled isotope concentration over time in the probe layer;
wherein in the case of the measurement of the rate of ion diffusion of the ion of interest of the functional layer:
- there is an additional step b') between steps b) and c) comprising the deposition of a blocking layer stripe over the functional layer, wherein said layer leaves a lateral opening for the labelled isotope to enter in the functional/probe bilayer and wherein said blocking layer is made of metal, a ceramic, a glass or a semiconductor inert to the ion of interest and transparent to the spectroscopy measurement.

In this disclosure and in the claims, terms such as "comprises," "comprising," "containing" and "having" are open-ended terms and can mean "includes," "including," and the like; while terms like "consisting of" or "consists of" refer to the mentioned elements after these terms and others which are not mentioned are excluded.

In the context of the present invention, the term "continuous and dense" applied to the probe layer defines a layer with a low concentration of porosity (density relative to the theoretical one >0.9) and with a lateral variation of thickness below 10%.

In the case of measuring the rate of diffusion, preferably the Raman or IR spectroscopy obtained in step d) is repeated at different in-plane points.

In a preferred embodiment the ion of interest in step a) is selected from O²⁻, Li⁺, H⁺, OH⁻

In another preferred embodiment, the probe layer is a solid-state ionic electrolyte.

In a more preferred embodiment, when the ion of interest is O²⁻, said solid-state ionic electrolyte is selected from Samaria-doped Ceria, Gadolinia-doped Ceria, Zirconia-doped Ceria, Yttria stabilized Zirconia, Scandia stabilised zirconia, La₁₋ₓSrₓGa_{1-y}Mg_{y}O_{3-δ}, Bi₄V₂₋ₓMEₓO_{11-δ} where ME is selected from at least one of the following: Cu, Co, Ni, Mg and where 0<x<1 and 0<*δ*<1.

In a more preferred embodiment, when the ion of interest is Li⁺, said solid-state ionic electrolyte is NASICON (sodium (Na) Super Ionic CONductor) type or garnets.

In a more preferred embodiment, when the ion of interest is H⁺/OH⁻, said solid-state ionic electrolyte is selected from BaCeO₃, BaZrO₃-based oxides and TiO₂.

It is noted that any of the embodiments disclosed herein for the process can be taken alone or combined with any other embodiment disclosed herein unless the context specifies otherwise. In other words, for example, a preferred option of a defined feature can be combined with a more or less preferred option of another feature.

Unless otherwise explained, all technical and scientific terms used herein have the same meaning as commonly understood by one of ordinary skill in the art to which this disclosure belongs. The singular terms "a", "an", and "the" include plural referents unless context clearly indicates otherwise. Similarly, the word "or" is intended to include "and" unless the context clearly indicate otherwise.

It should be noted that the term "approximately" or "about" applied to the values used earlier and later in this document includes a margin of error of ± 5 %, such as, for example, ± 4 %, ± 3 %, ± 2 %, ± 1 %.

The invention will be now illustrated by way of examples, which do not intend to limit its scope.

### EXAMPLE 1: Measurement of oxygen surface exchange coefficients of mixed ionic electronic conducting thin films

### 1. Methodology and experimental

The IERS method is based on the relationship between the frequency of oscillation of an atom or a molecule and its atomic mass. According to the harmonic approximation, the wavenumber of a vibrational mode, ω, is proportional to µ^{-1/2}: $ω ∝ {\left(\frac{k}{μ}\right)}^{1 / 2}$ where µ is the reduced mass $\left(μ=\frac{{m}_{1} {m}_{2}}{{m}_{1} + {m}_{2}}, {m}_{1},{m}_{2}\right.$ are the mass of the two bodies respectively) and k is the spring constant. Thus, each wavenumber corresponds to a specified reduced mass. In the case that the sample undergoes continuous isotopic fraction change without structural evolution, a continuous shift of Raman mode can be observed. For the inorganic oxide compounds with Raman modes of oxygen motions, the reduced mass is related with the number of oxygen atoms involved in the motions, which can either be an oxygen-cation vibration mode (single oxygen, O-M) or an oxygen-oxygen vibration mode (double oxygen). In this example, the F_{2g} mode of fluorite-structured CGO, a double oxygen mode (O-Ce-O) is considered and with the virtual crystal approximation (VCA), the mass of virtual crystal oxygen atom, *m̅*, can be calculated with Eq.(2): $\overline{m} = C \left(O 18\right) ⋅ {m}_{18 O} + \left(1+C\left(O 18\right)\right) ⋅ {m}_{16 O}$ where C(¹⁸O) is the ¹⁸O isotopic fraction and *m*₁₈*₀, m*_{16*0*} are the atomic mass for ¹⁸O and ¹⁸O respectively. Due to the low nature abundance of ¹⁷O (0.038%), the contribution from ¹⁷O is neglected here. Thus, based upon the relative shifts of the Raman mode, oxygen isotopic fraction can be estimated.

Limited by the principle of this method, one Raman vibrational mode involving oxygen atoms is at least needed to obtain oxygen isotopic concentration. Nevertheless, such Raman mode is not necessarily active in all oxides, making this method highly material-dependent. To break this limit, a bespoke multilayer thin film sample has been designed, see **Figure 1a****.** The main components of the sample are: i) a dense and thin functional layer, consisting of any functional materials of interest, ii) a probe layer, made of an oxide with at least one active Raman vibrational mode involving oxygen atoms, iii) a blocking layer capable of preventing oxygen diffusion into the substrate layers and also blocking or mitigating the Raman signal from the substrate.

**Figure 1b** demonstrates the experimental procedures to obtain the tracer surface exchange coefficient (k*) with the IERS technique. The as-deposited multilayer samples are firstly enriched with ¹⁸O after annealing at elevated temperature and an obvious peak shift, which is correspondence to the ¹⁸O concentration, can be observed with Raman measurement in the probe layer. The ¹⁸O enriched sample is then back exchanged at chosen temperature. Here, ¹⁸O enters from the top functional layer and then diffuses towards the probe layer, giving rise to a specific evolution of the oxygen vibrational mode that can be recorded in-situ by Raman measurements. After careful deconvolution, the peak position can be plotted as a function of back exchange duration (t). The normalised oxygen tracer concentration C', homogenous in the functional and probe layer, can be deducted from the Raman shifts of the oxygen vibrational mode, **Eq. (3):** $C ′ \left(t\right) = \frac{C \left(t\right) - {C}_{0}}{{C}_{∞} - {C}_{0}} = \frac{ω \left(t\right) - {ω}_{0}}{{ω}_{∞} - {ω}_{0}}$ where C(t), *C₀*, *C_{∞}* (*ω*(*t*)*, ω*₀*, ω_{∞}*) are ¹⁸O fraction (Raman shifts) at *t, t=0* and t=infinite. Thus, the normalised tracer oxygen concentration C' for this ¹⁸O back-exchange experiment is the ¹⁸O amount which has been exchanged out from the sample.

In this example, we aim to obtain the oxygen tracer surface exchange coefficient k* of the functional layer by measuring the evolution of the tracer concentration in the probe layer. To achieve this, the system must be under the oxygen surface exchange limited conditions, implying the following conditions:
1. In order to obtain the intrinsic oxygen surface exchange dynamics for the functional material $\left({k}_{f}^{∗}\right)$*,* this layer must be fully dense not to leave the probe layer in contact with the atmosphere. In this way, only the kinetics of oxygen surface exchange on the functional layer will be measured.
2. Oxygen transport in the multilayer sample is a surface exchange limited process, thus ∇¹⁸*O* = 0 within both the dense probe layer and functional material layer. For the multilayer considered with a single surface exchange coefficient ${k}_{f}^{∗}$*,* this condition is equivalent to ${D}_{f} / {k}_{f}^{∗} ≫ {t}_{f}$ and ${D}_{p} / {k}_{f}^{∗} ≫ {t}_{p}$*,* where *D_{f}, t_{f}* and *Dₚ, tₚ* are the oxygen diffusivity and thickness of functional and probe layers, respectively.
3. The probe layer is expected to present the same ¹⁸O concentration as that in the functional layer and thus no significant ¹⁸O concentration gradient across the interface. A schematic has been presented in **Figure 1c**.

Under these conditions, IERS measurement of the evolution of oxygen concentration in the probe layer will allow to measure the exchange kinetics of any functional layer, overcoming the limitation of one active Raman vibrational mode involving oxygen atoms. The oxygen tracer surface exchange coefficient k* can be subsequently obtained via fitting the curve with corresponding mathematical models where more details are provided in section 2.

In this example, Ce_{1-*x*}Gd*ₓ*O_{2-δ}(*x*=0.2) thin film (~115 nm) were used as the probe layer of oxygen isotopic fraction. CGO has been chosen because of its well-distinguishable Raman modes especially the sharp F_{2g} Raman band associated with the oxygen atom stretching vibrations and for its fast oxygen diffusivity (20% Gd-doped ceria *D*=3×10⁻¹⁰ cm²/s at 450 °C [31]). As functional layers, 15 nm thick La₁₋ₓSrₓCoO_{3-*δ*} (LSC) and La_{1-*x*}Sr*ₓ*FeO_{3-*δ*} (LSF) (x = 0.2, 0.4) were studied. The CGO probe layers were deposited on top of 10×10 mm² Si(111) substrates, which were already coated with multiple layers of Pt (150nm)/TiO₂ (40 nm)/ SiO₂ (500 nm) (LETI, Grenoble, France), by large area pulsed laser deposition (PLD) at 600°C under 5 mbar *p*O₂. The mixed electronic and ionic conducting oxide functional layers LSC and LSF were further fabricated on top of the CGO layers with a thickness of ca. 20 nm via PLD under same conditions. After deposition, all samples were cut into small pieces with diamond water-cooling wire saw for the in-situ measurements with various conditions. In the following sections, La_{0.8}Sr_{0.2}CoO_{3-*δ*}, La_{0.6}Sr_{0.4}CoO_{3-*δ*}, La_{0.8}Sr_{0.2}FeO_{3-*δ*} and La_{0.6}Sr_{0.4}CoO_{3-*δ*} are note as LSC20, LSC40, LSF20 and LSF40, respectively. The thin films are fully dense.

Prior to the in situ Raman measurements, the thin films were enriched with ¹⁸O via ¹⁸O isotopic exchange annealing at 640 °C for 1.5 hrs, *p*ₒ₂ = 0.2 atm (*c*(¹⁸O) = 98% CK Isotopes, UK). Raman spectra were acquired with two different spectrometers: Jobin Yvon/Horiba Labram spectrometer (Horiba, Japan) and inVia Qontor confocal Raman microscope (Renishaw, UK). For both instruments, a 488 nm blue laser was applied during all measurements, and for Labram Raman an 1800 t/mm holographic grating was applied while for Renishaw Raman a 2400 t/mm holographic grating was used. At the surface of the sample, the laser power was 0.7 mW and 2 mW, respectively for the two instruments. For in situ isotopic exchange experiments, a temperature cell (Linkam THMS 600) with a sapphire window for Raman measurements was mounted on the Raman stage. The sample was heated up to the back exchange temperature with a ramping rate of 100 °C min⁻¹. Once the temperature reached the setting value, after focusing the automatic acquisition was initiated, with an acquisition duration of 300s, under a compressed air flow of 20 ml min⁻¹ at ambient pressure (*Po*₂ = 200mbar). After the back exchange experiments, the cell was once again brought back to 150 °C at a rate of 100 °C min⁻¹ and a post-back exchange Raman spectrum of the sample was measured. The ¹⁸O concentration and chemical information of the multilayer thin film samples were also measured by time-of-flight secondary ion mass spectrometry (ToF-SIMS) (ToF-SIMS.5 ION.TOF GmbH, Münster, Germany). A 25 keV Bi⁺ analysis beam in burst-alignment mode (BAM) over 50×50 µm² area and a 1 keV Cs⁺ sputtering beam over 200×200 µm² area were combined in a non-interlaced mode with 0.2s pause. Charge compensation was supplied by an electron flood gun.

### 2. Results and discussion

### 2.1 Forward exchange: ¹⁸O isotopic exchange and VCA model

With the details provided in methodology and experimental sections, prior to in situ isotopic exchange Raman measurement, the thin film samples were firstly enriched with ¹⁸O, i.e., forward exchanged. As a matter of example, **Figure 2a, 2b** present the comparisons of the Raman spectra at room temperature before and after ¹⁸O forward exchange of the LSC20 and LSF20 samples respectively. A clear Raman shift of the F_{2g} peak position of CGO has been observed for all five samples after ¹⁸O forward exchange, with ca. 20 cm⁻¹ wavenumber shift corresponding to ca. 70% ¹⁸O concentration according to the VCA model[21,32]. To confirm the oxygen isotopic fraction measured by Raman, SIMS measurements were performed and ¹⁸O concentration depth profiles for all samples are presented in **Figure 2c. Figure 2d** compares the correlated ¹⁸O concentration obtained by Raman shifts and ToF-SIMS with VCA model. A good agreement between the VCA model and the SIMS result is observed, confirming the feasibility of tracking the tracer concentration by Raman spectroscopy.

As the estimated oxygen isotopic fraction via Raman measurement is averaged across the film thickness, a homogeneous distribution of oxygen isotopes is required. As shown in **Figure 2c****,** it is clear that for both LSF samples, a homogeneous distribution of ¹⁸O within and across the interface can be confirmed. Small variation of ¹⁸O observed in the LSC20 sample was originated during the storage of the samples. Overall, the homogenous depth profiles and the agreement between VCA and SIMS suggest that IERS can be used to study oxygen surface exchange in the functional/probing bilayer system proposed.

### 2.2 Back-exchange: IERS

The oxygen surface exchange dynamics of all LSC and LSF samples were then studied by in-situ IERS with the oxygen back-exchange approach. The ¹⁸O-enriched multilayers were rapidly heated to the chosen exchange temperature (100 °C/min) under ambient gas flow. The variation of isotopic concentration was derived by VCA approximation through the F_{2g} peak of the CGO probe layer (as detailed in **Figure 1****).** **Figure** 3a shows the normalised isotopic concentration as a function of annealing duration at 450 °C, as obtained by VCA model. A clear difference in the rate of normalised isotopic concentration variation can be observed across the different functional layers, spanning from the faster CGO to the slower LSF20 sample. Variation of normalised isotopic concentration is also strongly thermally activated, as shown in **Figure 3b****.** The results suggest that the functional layers influence the oxygen exchange kinetics of the multilayers compared with the bare CGO probe layer.

To properly interpret the results, we first verified the hypothesis of surface oxygen surface exchange limited case. After oxygen back exchange at 450 °C under air flow (pO₂ = 200 mbar), the ¹⁸O concentration of all five samples were measured again with ToF-SIMS, as shown in **Figure 3c****.** First, a good agreement has been found between the correlated ¹⁸O concentration obtained by Raman shifts with VCA model and ToF-SIMS. Additionally, excluding the surface region, the tracer profiles after the exchange are mostly flat, suggesting that oxygen diffusion is not limiting the exchange kinetics. A deviation of ¹⁸O concentration of ca. 2%, 3.5%, 1% and 2% is observed for the LSC20, LSC40, LSF20 and LSF40, respectively. This inhomogeneity is within the standard deviation (error range) of the Raman fitting and thus its impact on the obtained surface exchange coefficients by IERS is considered to be low. Variation of tracer in the upmost surface (estimated as 1-2 nm) are believed to be originated from the sample's cooling and not substantially affect the results.

Therefore, as all the samples fall under the oxygen surface exchange limited case, we could fit the IERS results to extract the surface exchange coefficients of the functional layers. The overall oxygen flux (*Jₒ*) with linear flux-force relationship across the surface between the gas phase O₂(g) and solid phase O²⁻(s) at equilibrium[33,34] can be then expressed in **Eq. (4).** ${J}_{O} = k * \left({C}_{g}-{C}_{s}\left(t\right)\right)$ where *C*_{g} and *C*ₛ are the isotope ratio in the gas phase and the isotope ratio at the surface of the functional layer at any time t, respectively. To fit the curve of C' *vs t,* three models, i.e., single exponential equation, two exponential equation and non-linear have been proposed in the previous work.[21] Here, two-exponential solution Eq. (6) with two parallel time constants (*τ*_{α} and *τ*_{β}) presents a good match to the experimental data. $C ′ \left(t\right) = 1 - {A}_{α} {exp}^{- t / {τ}_{α}} - {A}_{β} {exp}^{- t / {τ}_{β}}$ where *A_{α}* and *A_{β}* are weighting factors and *A_{α}+A_{β} = 1, τ_{α}* and *τ_{β}* are two characteristic time constants which leads to the corresponding surface exchange coefficient k = *d*/*r,* where d is the sum of the thickness of the functional and probe layer. The two surface exchange constants of the fittings (*k_{α}* and *k*_{β}) are shown in **Figure 4a** and **4b** for LSC and LSF, respectively. [25][26][27][25,34][26][25][27,28][21][29][16][30]

### 3. Conclusions

In this example, we have demonstrated that the IERS method enables universal investigation on oxygen surface exchange dynamics with a probe layer, extending the application of this novel technique to broader material systems. With a proper probe layer, the oxygen concentration in the functional layer under oxygen surface exchange-limited conditions can be obtained with high time resolution and the oxygen surface exchange kinetics are determined thereafter. The obtained oxygen surface exchange coefficients of the measured model materials via IERS are comparable with the literature data. This novel sample design addresses the limitation of the IERS method as a material dependent approach, enabling the method to become a standardized methodology for studying ion transport dynamics in situ, particularly with its simple set up and easy accessibility.

### REFERENCES

[1] J. Janek, W.G. Zeier, A solid future for battery development, Nat Energy 1 (2016) 1-4. https://doi.org/10.1038/nenergy.2016.141.
[2] T. Schmaltz, F. Hartmann, T. Wicke, L. Weymann, C. Neef, J. Janek, A Roadmap for Solid-State Batteries, Adv Energy Mater (2023). https://doi.org/10.1002/aenm.202301886.
[3] K. Märker, P.J. Reeves, C. Xu, K.J. Griffith, C.P. Grey, Evolution of Structure and Lithium Dynamics in LiNi0.8Mn0.1Co0.1O2 (NMC811) Cathodes during Electrochemical Cycling, Chemistry of Materials 31 (2019) 2545-2554. https://doi.org/10.1021/acs.chemmater.9b00140.
[4] A. Hauch, R. Küngas, P. Blennow, A.B. Hansen, J.B. Hansen, B. V. Mathiesen, M.B. Mogensen, Recent advances in solid oxide cell technology for electrolysis, Science (1979) 370 (2020). https://doi.org/10.1126/science.aba6118.
[5] D.J.L. Brett, A. Atkinson, N.P. Brandon, S.J. Skinner, Intermediate temperature solid oxide fuel cells, Chem Soc Rev 37 (2008) 1568-1578. https://doi.org/10.1039/b612060c.
[6] A.K. Azad, A.M. Abdalla, A. Afif, A. Azad, S. Afroze, A.C. Idris, J.Y. Park, M. Saqib, N. Radenahmad, S. Hossain, I. Bin Elius, M. Al-Mamun, J. Zaini, A. Al-Hinai, M.S. Reza, J.T.S. Irvine, Improved mechanical strength, proton conductivity and power density in an 'all-protonic' ceramic fuel cell at intermediate temperature, Sci Rep 11 (2021). https://doi.org/10.1038/s41598-021-98987-6.
[7] Z. Shen, J.A. Kilner, S.J. Skinner, Mass Transport in (La0.8Sr0.2)0.95Crx Fe1-xO3-δ -Scandia-Stabilised Zirconia Dualphase Composite as a Dense Layer in Oxygen Transport Membranes, The Journal of Physical Chemistry C 122 (2018) 27135-27147. https://doi.org/10.1021/acs.jpcc.8b06302.
[8] P.M. Geffroy, J. Fouletier, N. Richet, T. Chartier, Rational selection of MIEC materials in energy production processes, Chem Eng Sci 87 (2013) 408-433. https://doi.org/10.1016/j.ces.2012.10.027.
[9] R. Kiebach, S. Pirou, L. Martinez Aguilera, A.B. Haugen, A. Kaiser, P.V. Hendriksen, M. Balaguer, J. Garcia-Fayos, J.M. Serra, F. Schulze-Küppers, M. Christie, L. Fischer, W.A. Meulenberg, S. Baumann, A review on dual-phase oxygen transport membranes: from fundamentals to commercial deployment, J Mater Chem A Mater 10 (2022) 2152-2195. https://doi.org/10.1039/d1ta07898d.
[10] A. Koroleva, T.-K. Khuu, C. Magén, H. Roussel, C. Jiménez, C. Ternon, E.-I. Vatajelu, M. Burriel, Impact of the La2NiO4+δ oxygen content on the synaptic properties of the TiN/La2NiO4+δ/Pt memristive devices, (2024). https://doi.org/10.1002/aelm.202400096.
[11] R.A. De Souza, R.J. Chater, Oxygen exchange and diffusion measurements: The importance of extracting the correct initial and boundary conditions, Solid State Ion 176 (2005) 1915-1920. https://doi.org/10.1016/j.ssi.2005.05.010.
[12] R.J. Chater, S. Carter, J.A. Kilner, B.C.H. Steele, Development of a novel SIMS technique for oxygen self-diffusion and surface exchange coefficient measurements in oxides of high diffusivity, Solid State Ion 53-56 (1992) 859-867. https://doi.org/10.1016/0167-2738(92)90266-R.
[13] J.A. Kilner, S.J. Skinner, H.H. Brongersma, The isotope exchange depth profiling (IEDP) technique using SIMS and LEIS, Journal of Solid State Electrochemistry 15 (2011) 861-876. https://doi.org/10.1007/s10008-010-1289-0.
[14] H.J.M. Bouwmeester, C. Song, J. Zhu, J. Yi, M. Van Sint Annaland, B.A. Boukamp, A novel pulse isotopic exchange technique for rapid determination of the oxygen surface exchange rate of oxide ion conductors, Physical Chemistry Chemical Physics 11 (2009) 9640-9643. https://doi.org/10.1039/b912712g.
[15] J.T.S. Irvine, D.C. Sinclair, A.R. West, Characterization by Impedance Spectroscopy, 1990.
[16] J.E. ten Elshof, M.H.R. Lankhorst, H.J.M. Bouwmeester, Oxygen Exchange and Diffusion Coefficients of Strontium-Doped Lanthanum Ferrites by Electrical Conductivity Relaxation, J Electrochem Soc 144 (1997) 1060-1067. https://doi.org/10.1149/1.1837531.
[17] R. Moreno, P. Garcia, J. Zapata, J. Roqueta, J. Chaigneau, J. Santiso, Chemical strain kinetics induced by oxygen surface exchange in epitaxial films explored by time-resolved X-ray diffraction, Chemistry of Materials 25 (2013) 3640-3647. https://doi.org/10.1021/cm401714d.
[18] S.D. Kang, W.C. Chueh, Galvanostatic Intermittent Titration Technique Reinvented: Part I. A Critical Review, J Electrochem Soc 168 (2021) 120504. https://doi.org/10.1149/1945-7111/ac3940.
[19] W. Weppner, R.A. Huggins, Electrochemical investigation of the chemical diffusion, partial ionic conductivities, and other kinetic parameters in Li3Sb and Li3Bi, J Solid State Chem 22 (1977) 297-308. https://doi.org/10.1016/0022-4596(77)90006-8.
[20] A. Stangl, N. Nuns, C. Pirovano, K. Kreka, F. Chiabrera, A. Tarancón, M. Burriel, Real time observation of oxygen diffusion in CGO thin films using spatially resolved Isotope Exchange Raman Spectroscopy, Small Struct (2024) 2400237. https://doi.org/10.1002/sstr.202400237.
[21] A. Stangl, D. Pla, C. Pirovano, O. Chaix-Pluchery, F. Baiutti, F. Chiabrera, A. Tarancón, C. Jiménez, M. Mermoux, M. Burriel, Isotope Exchange Raman Spectroscopy (IERS): A Novel Technique to Probe Physicochemical Processes In Situ, Advanced Materials 35 (2023). https://doi.org/10.1002/adma.202303259.
[22] B. -K Kim, S. -J Park, H. -o Hamaguchi, Determination of the Oxygen Self-Diffusion Coefficients in Y2O3-Containing Tetragonal Zirconia Polycrystals by Raman Spectrometric Monitoring of the 160-180 Exchange Reaction, Journal of the American Ceramic Society 76 (1993) 2119-2122. https://doi.org/10.1111/j.1151-2916.1993.tb08345.x.
[23] B. -K Kim, S.J. Park, H. -o Hamaguchi, Raman Spectrometric Determination of the Oxygen Self-Diffusion Coefficients in Oxides, Journal of the American Ceramic Society 77 (1994) 2648-2652. https://doi.org/10.1111/j.1151-2916.1994.tb04656.x.
[24] D. Stender, S. Heiroth, T. Lippert, A. Wokaun, A comparison between micro-Raman spectroscopy and SIMS of beveled surfaces for isotope depth profiling, Solid State Ion 253 (2013) 185-188. https://doi.org/10.1016/j.ssi.2013.09.053.
[25] A.V. Berenov, A. Atkinson, J.A. Kilner, E. Bucher, W. Sitte, Oxygen tracer diffusion and surface exchange kinetics in La0.6Sr0.4CoO3-δ, Solid State Ion 181 (2010) 819-826. https://doi.org/10.1016/j.ssi.2010.04.031.
[26] S. Carter, A. Selcuk, R.J. Chater, J. Kajda, J.A. Kilner, B.C.H. Steele, Oxygen transport in selected nonstoichiometric perovskite-structure oxides, Solid State Ion 53-56 (1992) 597-605.
[27] R.A. De Souza, J.A. Kilner, Oxygen transport in La1-xSrxMn1-yCoyO3±δ perovskites: Part I. Oxygen tracer diffusion, Solid State Ion 106 (1998) 175-187. https://doi.org/10.1016/S0167-2738(97)00499-2.
[28] R.A. De Souza, J.A. Kilner, Oxygen transport in La1-xSrxMn1-yCoyO3±δ perovskites: Part II. Oxygen surface exchange, Solid State Ion 126 (1999) 153-161. https://doi.org/10.1016/S0167-2738(99)00228-3.
[29] E.N. Armstrong, K.L. Duncan, E.D. Wachsman, Effect of A and B-site cations on surface exchange coefficient for ABO3 perovskite materials, Physical Chemistry Chemical Physics 15 (2013) 2298-2308. https://doi.org/10.1039/c2cp42919e.
[30] T. Ishigaki, S. Yamauchls, K. Kishio, J. Mizusaki, K. Fueki, Diffusion of Oxide Ion Vacancies in Perovskite-Type Oxides, J Solid State Chem 73 (1988) 179-187.
[31] K. Kowalski, Oxygen diffusion and surface exchange in yttria-stabilized zirconia and gadolinia-doped ceria ceramics at low temperatures, in: Defect and Diffusion Forum, Trans Tech Publications Ltd, 2009: pp. 769-774. https://doi.org/10.4028/www.scientific.net/DDF.289-292.769.
[32] M. Cardona, M.L.W. Thewalt, Isotope effects on the optical spectra of semiconductors, Rev Mod Phys 77 (2005) 1173-1224. www.webelements.com.
[33] Joachim. Maier, Physical chemistry of ionic materials : ions and electrons in solids, John Wiley & Sons, Ltd, Chichester, 2004.
[34] J.A. Kilner, R.A. De Souza, I.C. Fullarton, Surface exchange of oxygen in mixed conducting perovskite oxides, Solid State Ion 86-88 (1996) 703-709.

## Claims

1. A method for the measurement of the rates of ion exchange and diffusion of an ionic conducting material or mixed ionic-electronic conducting material, comprising the steps of:
a) depositing a probe layer over a substrate, wherein said probe layer is made of an ionic conductor that has at least one Raman or IR-active mode which involves the vibration of the ion or ions of interest, and wherein said probe layer is continuous and dense, and has a thickness from 1 nm to 1 µm, and wherein said substrate is selected from a metal, a ceramic, a glass or a semiconductor inert to the ion of interest and does not have any interferential Raman mode, wherein by "interferential Raman mode" is meant that the Raman mode from the substrate is with indistinguishable wavenumber as the vibration of the ion or ions of interest from the probe layer;
b) depositing a functional layer in the form of a film over the probe layer, wherein said functional layer is an ionic conducting material or mixed ionic-electronic conducting material with a thickness from 1 nm to 1 µm;
c) exposing the material constituted by functional layer-probe layer-substrate obtained after step b) to a medium containing a different concentration of a labelled isotope of the ion of interest for exchanging the preexisting ion of interest in the probe layer and in the functional layer;
d) performing a Raman or IR spectroscopy and measuring the width/intensity and/or frequency of the Raman or IR modes of interest in the probe layer at the same time of step c) or after step c);
e) quantifying the total or labelled isotope concentration of the ion of interest in the probe layer by using the relationship between the frequency and/or the width/intensity of the Raman or IR-active mode of the ion of interest and its total or labelled isotope concentration;
f) quantifying the rate of ion exchange or diffusion of the ion of interest of the functional layer based on the evolution of the labelled isotope concentration over time in the probe layer;
wherein in the case of the measurement of the rate of ion diffusion of the ion of interest of the functional layer:
- there is an additional step b') between steps b) and c) comprising the deposition of a blocking layer stripe over the functional layer, wherein said layer leaves a lateral opening for the labelled isotope to enter in the functional/probe bilayer and wherein said blocking layer is made of metal, a ceramic, a glass or a semiconductor inert to the ion of interest and transparent to the spectroscopy measurement.

2. The method according to claim 1, wherein in the case of measuring the rate of diffusion the Raman or IR spectroscopy obtained in step d) is repeated at different in-plane points.

3. The method according to any of claims 1 or 2, wherein the ion of interest in step a) is selected from O²⁻, Li⁺, H⁺, OH⁻.

4. The method according to any of claims 1 to 3, wherein the probe layer is a solid-state ionic electrolyte.

5. The method according to claim 4, wherein for the ion of interest being O²⁻, said solid-state ionic electrolyte is selected from Samaria-doped Ceria, Gadolinia-doped Ceria, Zirconia-doped Ceria, Yttria stabilized Zirconia, La₁₋ₓSrₓGa_{1-y}Mg_{y}O_{3-δ}, Bi₄V₂₋ₓMEₓO_{11-δ} where ME is selected from at least one of the following: Cu, Co, Ni, Mg and where 0<x<1 and 0<δ<1

6. The method according to claim 4, wherein for the ion of interest being Li⁺, said solid-state ionic electrolyte is NASICON type or garnets.

7. The method according to claim 4, wherein for the ion of interest being H⁺/OH⁻, said solid-state ionic electrolyte is selected from BaCeO₃, BaZrO₃-based oxides and TiO₂.
